**Europäisches Patentamt**

**European Patent Office**

**Office européen des brevets**

(19)

(11) Veröffentlichungsnummer: **0 046 162**
**B1**

(12) **EUROPÄISCHE PATENTSCHRIFT**

(45) Veröffentlichungstag der Patentschrift:
**22.02.84**

(51) Int. Cl.³: **F 16 K 11/06**

(21) Anmeldenummer: **81101276.4**

(22) Anmeldetag: **23.02.81**

(54) **Einhebelmischventil zur Steuerung eines Wasserstromes.**

(30) Priorität: **20.08.80 DE 3031384**

(43) Veröffentlichungstag der Anmeldung:
**24.02.82 Patentblatt 82/8**

(45) Bekanntmachung des Hinweises auf die Patenterteilung:
**22.02.84 Patentblatt 84/8**

(84) Benannte Vertragsstaaten:
**BE FR GB IT NL SE**

(56) Entgegenhaltungen:
**CA - A - 1 047 363**
**DE - A - 2 756 784**
**DE - A - 2 827 236**
**DE - B - 1 550 060**
**DE - B - 1 949 318**
**US - A - 3 667 503**

(73) Patentinhaber: **IDEAL-STANDARD GMBH, Euskirchener Strasse 80, D-5300 Bonn 1 (DE)**

(72) Erfinder: **Delker, Wilfried, Dipl.-Ing., Panoramastrasse 3a, D-5330 Königswinter (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Einhebel-Mischventil zur Steuerung eines Wasserstromes

Die Erfindung bezieht sich auf ein Einhebel-Mischventil zur Steuerung eines Wasserstromes mit einem einen Auslauf aufweisenden Ventilkörper und mit mindestens zwei dicht aufeinanderliegenden keramischen Steuerscheiben, von denen die eine als Ventilscheibe ausgebildet ist, die auf der anderen, als feststehende Ventilsitzscheibe ausgeführten Steuerscheibe verschiebbar ist, wobei die Ventilsitzscheibe Wassereinlaßöffnungen besitzt, mit statischer Abdichtung parallel zu einer Wassereinlaßbohrungen aufweisenden Anschlußfläche des Ventilkörpers angeordnet ist und sich ebenso wie die mit den Wassereinlaßöffnungen zusammenwirkende Ventilscheibe in einer zum Auslauf führenden Mischkammer befindet, welche gegenüber einer Öffnung im Ventilkörper abgedichtet ist, die eine Halterung zur axialfesten Lagerung für einen Betätigungsfinger aufnimmt, dessen eines Ende mit einem Ventilhebel in Verbindung steht, während das andere Ende in eine Ausnehmung der Ventilscheibe eingreift.

Bestimmte mit keramischen Steuerscheiben ausgerüstete Ventile haben sich in der Praxis bestens bewährt. Die Ventile lassen sich noch nach vielen Jahren sehr leicht bedienen, und sie gewährleisten eine gleichbleibend sichere Funktion. Solche Ventile sind z. B. bekannt aus den DE-B-1 550 060 und DE-B-1 949 318. Bei den darin beschriebenen und dargestellten Mischventil-Ausführungen strömt das Wasser über zwei in der feststehenden Ventilsitzscheibe befindliche Einlaßöffnungen in eine Umlenkkammer der beweglichen Ventilscheibe. Diese Umlenkkammer ist nur zur Ventilsitzscheibe hin offen. Das Wasser strömt daher von der Umlenkkammer direkt zu einer ebenfalls in der Ventilsitzscheibe befindlichen Auslaßöffnung. Der Aufnahmeraum des Ventilkörpers für die Steuerelemente ist somit nicht von Wasser durchströmt, und er braucht also nicht wasserdicht verschlossen zu sein. Eine noch nach vielen Jahren einwandfreie Funktion bei mit keramischen Scheiben ausgerüsteten Mischventilen setzt aber insbesondere voraus, daß auch sonstige Dichtelemente aus z. B. elastischem Material weitgehendst verschleißfrei belastet sind. Diese Voraussetzung ist bei den genannten Mischventilen nach den DE-B-1 550 060 und DE-B-1 949 318 erfüllt. Wegen der besonders vorteilhaften Konstruktion benötigten diese Mischventile nämlich nur noch statisch belastete Dichtungen aus Gummi od. dgl. zwischen der Ventilsitzscheibe und der Anschlußfläche des Ventilkörpers.

Bei Mischventilen der anmeldungsgemäßen Gattung, die für die Auslegung der Wasserwege einen größeren Spielraum bieten, ist der Aufnahmeraum des Ventilkörpers für die Steuerelemente von Wasser durchströmt. Er muß also wasserdicht verschlossen sein. Dabei ergeben sich besondere Abdichtungsprobleme, die bei den bisher bekannten Mischventilen dieser Gattung nicht befriedigend gelöst worden sind.

Mischventile dieser Art sind z. B. in der kanadischen Patentschrift 1 047 363 offenbart. Dabei stützt sich die bewegliche Ventilscheibe über eine elastische Ringdichtung direkt an einem den Betätigungsfinger aufnehmenden Deckel der Mischkammer ab. Ein erheblicher Nachteil bei Ausführungen dieser Art ist darin zu sehen, daß die Dichtung dynamisch belastet ist und einem erheblichen Verschleiß unterliegt. Es hat sich in der Praxis gezeigt, daß selbst bei gut gefetteten dynamischen Dichtungen aus hochwertigem Gummi od. dgl. nach einiger Zeit ein erhöhter Verschleiß eintritt, insbesondere bei sehr kalkhaltigem Wasser, so daß die Gefahr von Undichtigkeiten besteht. Bei Ventilen der anmeldungsgemäßen Gattung würden solche Undichtigkeiten dazu führen können, daß beim Betrieb Wasser oben aus dem Ventil regelrecht herausspritzt.

Ferner sind gemäß der deutschen Offenlegungsschrift 2 827 236 (entspricht dem DE-U-7 818 627) Mischarmaturen der eingangs genannten Art bekannt, die gekennzeichnet sind durch eine von wenigstens zwei Zutrittsöffnungen durchsetzte, feststehende erste Scheibe, durch eine relativ zur ersten Scheibe verdrehbare, mit den Öffnungen derselben zusammenwirkende und Durchlässe aufweisende zweite Scheibe sowie durch eine relativ zur zweiten Scheibe in Richtung einer Verbindungslinie zwischen den Mittelpunkten der Durchlässe derselben linear verschiebliche dritte Scheibe, welche wenigstens zwei mit denen der zweiten Scheibe zusammenwirkende Durchlässe aufweist. Dabei ist die dritte Scheibe über einen mittig angeordneten Zapfen bewegungsübertragend mit einem Mischkopf verbunden. Der Mischkopf ist kulissenartig an einem drehbaren Steuerkopf geführt, welcher eine in einem Deckel gehaltene Lagerung für einen Betätigungsfinger bildet. Der Steuerkopf ist abdichtend in dem Deckel gelagert und trägt eine Ringdichtung, welche sich in abdichtender Anlage am Mischkopf befindet und diesen elastisch abwärts belastet, so daß die drei Verteilerscheiben in satter gegenseitiger Anlage gehalten sind, und sich das so gebildete Scheibenpaket indirekt über den Mischkopf und die Ringdichtung an dem Steuerkopfteil des Deckels abstützt. Auch bei dieser Konstruktion ist die Ringdichtung zwischen dem Deckel und dem Scheibenpaket wegen der Verschiebbarkeit des mit der dritten Scheibe eine Baueinheit bildenden Mischkopfes dynamisch belastet und einem entsprechend hohen Verschleiß ausgesetzt, wodurch sich die bereits geschilderten Gefahren ergeben.

Nicht anders sind die Verhältnisse bei Ausführungen z. B. gemäß der DE-A-2 756 784 (entspricht dem DE-U-7 738 802).

Der Erfindung liegt die Aufgabe zugrunde, diese Nachteile zu beseitigen und ein Mischventil der eingangs genannten Art zu schaffen, welches einfach im Aufbau und sicher in der Wirkungsweise ist.

Erreicht ist dieses Ziel in vorteilhafter Weise dadurch, daß sich die Anschlußfläche für die Ventilsitzscheibe auf der Seite des Ventilkörpers befindet, die den Betätigungsfinger aufnimmt, der mit seinem einen Ende die Ventilsitzscheibe durchdringt und in eine Ausnehmung auf der Dichtseite der Ventilscheibe eingreift.

Erfindungsgemäß stützt sich die bewegliche Ventilscheibe nicht mehr über eine dynamisch belastete Dichtung aus z. B. Gummi an einem den Betätigungsfinger aufnehmenden Kopfteil od. dgl. des Mischventils ab, sondern sie wirkt mit einer Ventilsitzscheibe zusammen, die auf ihrer dem Betätigungsfinger zugewandten Seite mit statischer Abdichtung parallel zu einer Wassereinlaßbohrungen aufweisenden Anschlußfläche des Ventilkörpers angeordnet ist.

Auf der dieser Anschlußfläche gegenüberliegenden Seite der Mischkammer stützt sich die Ventilscheibe gemäß einem ausgestaltenden Merkmal der Erfindung an einem Deckel zum Verschließen einer Ventilkörper-Öffnung ab, die für den Einbau der Steuerscheiben und statischen Dichtungen vorgesehen ist.

Nach einer anderen Ausgestaltung der Erfindung ist der Ventilkörper auf der Seite, auf der sich die Anschlußfläche befindet, mit einer Öffnung für den Einbau der Steuerscheiben und Dichtungen versehen, und die Öffnung ist mittels eines Deckels verschließbar, der die Halterung zur axialfesten Lagerung des Betätigungsfingers, die Anschlußfläche sowie die Aufnahmen für die Dichtungen aufweist.

Die nur statisch belasteten Dichtungen zwischen der Ventilsitzscheibe und der Anschlußfläche haben eine sehr lange Lebensdauer. Nach alledem ist eine erfindungsgemäße Ausführung den vorbekannten Konstruktionen weit überlegen.

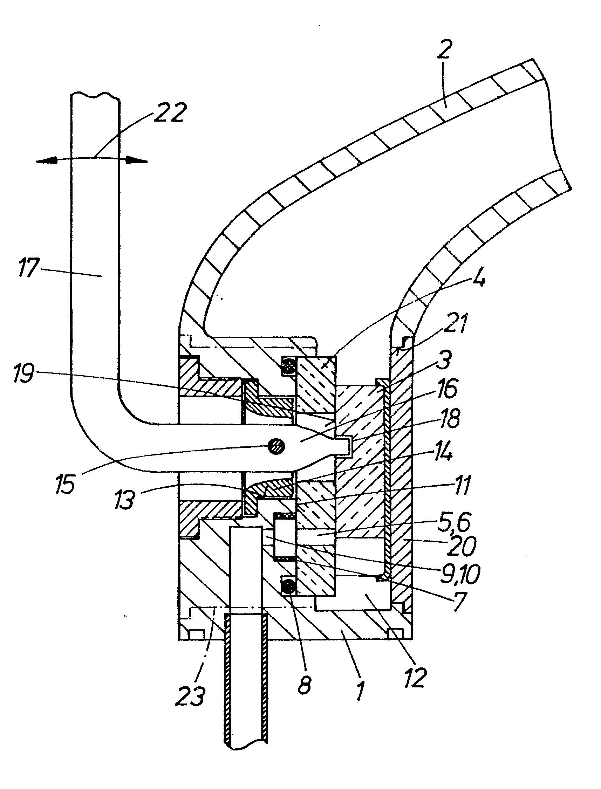

In der Zeichnung ist der Erfindungsgegenstand in einem Ausführungsbeispiel im Längsschnitt dargestellt.

Das dargestellte Einhebel-Mischventil weist einen Ventilkörper 1 mit einem Auslauf 2 auf. Das Ventil ist mit zwei aufeinanderliegenden keramischen Steuerscheiben 3 und 4 ausgerüstet, von denen eine als Ventilscheibe 3 ausgebildet und auf einer feststehenden Ventilsitzscheibe 4 verschiebbar ist, die Wassereinlaßöffnungen 5, 6 für kaltes und warmes Wasser besitzt und unter Zwischenschaltung von statischen Dichtungen 7, 8 parallel zu einer Wassereinlaßbohrungen 9, 10 aufweisenden Anschlußfläche 11 des Ventilkörpers 1 angeordnet ist. Die Ventilsitzscheibe 4 befindet sich ebenso wie die mit den Wassereinlaßöffnungen 5, 6 zusammenwirkende Ventilscheibe 3 in einer zum Auslauf führenden Mischkammer 12. Die Mischkammer 12 ist gegenüber einer Öffnung 13 im Ventilkörper 1 abgedichtet, die einen Drehring 14 mit einer Achse 15 zur axialfesten Lagerung für einen Betätigungsfinger 16 aufnimmt. Der Betätigungsfinger 16 geht außen in einen Ventilhebel 17 über, während er mit seinem inneren Ende in eine Ausnehmung 18 der Ventilscheibe 3 eingreift.

Wie ersichtlich, befindet sich die Anschlußfläche 11 für die Ventilsitzscheibe 4 auf der Seite des Ventilkörpers 1, die den Betätigungsfinger 16 aufnimmt, der mit seinem inneren Ende die Ventilsitzscheibe 4 durchdringt und auf der Dichtseite 19 der Ventilscheibe 3 in die Ausnehmung 18 eingreift. Ein Deckel 20 verschließt eine Ventilkörper-Öffnung 21, die für den Einbau der Steuerscheiben 3, 4 sowie der statischen Dichtungen 7, 8 vorgesehen ist.

Die Funktion von Einhebel-Mischventilen der anmeldungsgemäßen Gattung ist hinreichend bekannt, so daß hierzu ins Detail gehende Erläuterungen nicht erforderlich sind. Die Funktionsweise wird deshalb nur kurz beschrieben. Wird der Ventilhebel 17 nach rechts oder links in Richtung der Pfeile 22 bewegt, so werden die hintereinanderliegenden Wassereinlaßöffnungen 5, 6 für das kalte und warme Wasser mittels der Ventilscheibe 3 mehr oder weniger freigegeben oder geschlossen. Die Ventilscheibe 3 wird bei der genannten Hebelbewegung linear verschoben, wodurch eine Mengenregulierung erfolgt. Wenn dagegen der Ventilhebel 17 quer zur Richtung der Pfeile 22 geschwenkt wird, dann erfolgt eine Art Drehbewegung der Ventilscheibe 3 und damit eine Temperatursteuerung.

Wie bereits erwähnt, ist die dargestellt und beschriebene Ausführung nur ein Beispiel zur Verwirklichung der Erfindung und diese ist nicht darauf beschränkt, vielmehr sind im Rahmen des erfindungsgemäßen Grundgedankens noch mancherlei andere Ausführungsmöglichkeiten gegeben. So ist die Erfindung auch z. B. bei solchen Mischventilen anwendbar, bei denen für die Steuerung des Wasserstromes mehr als zwei Steuerscheiben zum Einsatz kommen. Schließlich ist es denkbar, die Ventilkörper-Öffnung für den Einbau der Steuerscheiben und statischen Dichtungen auf der Seite des Ventilkörpers vorzusehen, welche den Betätigungsfinger aufnimmt. Bei einer derartigen Ausführung würde der Deckel (23 — siehe strichpunktierte Linie —) zum Verschließen einer solchen Einbau-Öffnung gleichzeitig mit der Halterung zur axialfesten Lagerung des Betätigungsfingers, mit der Anschlußfläche für die Ventilsitzscheibe und den Aufnahmen für die statischen Dichtungen versehen sein. Schließlich ist es denkbar, die Scheiben 3, 4 in einem mit Boden und Kappe versehenen Kartuschengehäuse mit statischer Abdichtung anzuordnen. Bei einer solchen Konstruktion würde der Boden zwischen der Anschlußfläche 11 und der Ventilsitzscheibe 4 vorgesehen sein und den Wassereinlaßöffnungen und -bohrungen 5, 6 bzw. 7, 8 entsprechende Durchtrittsöffnungen für das kalte und warme Wasser aufweisen. Der Boden könnte dabei gleichzeitig eine Halterung mit der axialfesten Lagerung für den Betätigungsfinger 16 aufweisen.

## Patentansprüche

1. Einhebel-Mischventil zur Steuerung eines Wasserstromes mit einem einen Auslauf (2) aufweisenden Ventilkörper (1) und mit mindestens zwei dicht aufeinanderliegenden keramischen Steuerscheiben (3, 4), von denen die eine als Ventilscheibe (3) ausgebildet ist, die auf der anderen, als feststehende Ventilsitzscheibe (4) ausgeführten Steuerscheibe verschiebbar ist, wobei die Ventilsitzscheibe (4) Wassereinlaßöffnungen (5, 6) besitzt, mit statischer Abdichtung (7, 8) parallel zu einer Wassereinlaßbohrungen (9, 10) aufweisenden Anschlußfläche (11) des Ventilkörpers (1) angeordnet ist und sich ebenso wie die mit den Wassereinlaßöffnungen (5, 6) zusammenwirkende Ventilscheibe (3) in einer zum Auslauf führenden Mischkammer (12) befindet, welche gegenüber einer Öffnung (13) im Ventilkörper (1) abgedichtet ist, die eine Halterung (14) zur axialfesten Lagerung für einen Betätigungsfinger (16) aufnimmt, dessen eines Ende mit einem Ventilhebel (17) in Verbindung steht, während das andere Ende in eine Ausnehmung (18) der Ventilscheibe (3) eingreift, dadurch gekennzeichnet, daß sich die Anschlußfläche (11) für die Ventilsitzscheibe (4) auf der Seite des Ventilkörpers (1) befindet, die den Betätigungsfinger (16) aufnimmt, der mit seinem einen Ende die Ventilsitzscheibe (4) durchdringt und in eine Ausnehmung (18) auf der Dichtseite (19) der Ventilscheibe (3) eingreift.

2. Einhebel-Mischventil nach Anspruch 1, dadurch gekennzeichnet, daß sich die Ventilscheibe (3) auf der der Anschlußfläche (11) gegenüberliegenden Seite der Mischkammer (12) an einem Deckel (20) zum Verschließen einer Ventilkörper-Öffnung (21) für den Einbau der Steuerscheiben (3, 4) und statischen Dichtungen (7, 8) abstützt.

3. Einhebel-Mischventil nach Anspruch 1, dadurch gekennzeichnet, daß der Ventilkörper (1) auf der Seite, auf der sich die Anschlußfläche (11) befindet, mit einer Öffnung für den Einbau der Steuerscheiben (3, 4) und statischen Dichtungen (7, 8) versehen, und die Öffnung mittels eines Deckels (23) verschließbar ist, der die Halterung (14) zur axialfesten Lagerung des Betätigungsfingers (16), die Anschlußfläche (11) sowie die Aufnahmen für die statischen Dichtungen (7, 8) aufweist.

## Claims

1. Single-lever mixing valve for modulating a water stream, with a valve body (1) having an outlet (2) and with at least two ceramic plate cams (3, 4) lying closely on top of one another, one of which is constructed as a valve disc (3), which can be shifted on the other plate cam that is constructed as a fixed valve seat disc (4), whereby the valve seat disc (4) has water inlet apertures (5, 6) with static sealing (7, 8) parallel to a connection surface (11) of the valve body (1) which has water inlet bores (9, 10), and, like the valve disc (3) co-operating with the water inlet apertures (5, 6), is situated in a mixing chamber (12) leading to the outlet, which chamber is sealed off with respect to an aperture (13) in the valve body (1), which holds a mounting support (14) for the axially secure mounting of an actuation finger (16), whose one end is connected to a valve lever (17), whilst the other end engages in a recess (18) of the valve disc (3), characterised in that the connection surface (11) for the valve seat disc (4) is on the side of the valve body (1) which holds the actuation finger (16), which penetrates the valve seat disc (4) with its one end and engages in a recess (18) on the sealed side (19) of the valve disc (3).

2. Single-lever mixing valve according to claim 1, characterised in that the valve disc (3) is supported on the side of the mixing chamber (12) opposite the connection surface (11) on a cover (20) for closing a valve body-aperture (21) for the insertion of the plate cams (3, 4) and static seals (7, 8).

3. Single-lever mixing valve according to claim 1, characterised in that the valve body (1) on the side on which the connection surface (11) is located, is provided with an aperture for the insertion of the plate cams (3, 4) and static seals (7, 8), and the aperture can be closed by means of a cover (23) which has the mounting support (14) for the axially secure seating of the actuation finger (16), the connection surface (11) and the mountings for the static seals (7, 8).

## Revendications

1. Robinet mélangeur comportant un bras de levier pour conduire un courant d'eau, comprenant un corps (1) muni d'une sortie (2) et d'au moins deux disques de commande (3, 4) en céramique et disposés directement l'un sur l'autre, dont l'un est constitué sous forme d'un disque de robinet (3) qui peut être déplacé sur l'autre disque de commande constitué sous la forme d'un siège fixe (4), le disque (4) qui constitue le siège du robinet comprenant des ouvertures d'entrée d'eau (5, 6), étant disposé avec un dispositif d'étanchéité statique (7, 8) parallèlement à une surface de raccordement (11) du corps (1) du robinet comprenant des alésages d'entrée d'eau (9, 10) et se trouvant, comme le disque (3) qui coopère avec les ouvertures d'entrée d'eau (5, 6), dans une chambre de mélange (12) conduisant à une sortie et qui est rendue étanche par rapport à une ouverture (13) pratiquée dans le corps (1) du robinet et qui supporte une monture (14) destinée au positionnement axial et fixe d'un doigt de manœuvre (16) dont une extrémité est en liaison avec un bras de levier (17) alors que l'autre extrémité pénètre dans un évidement (18) du disque (3) du robinat, caractérisé en ce que la surface de raccordement (11) destinée au disque (4) formant le siège du robinet se trouve sur le côté du corps (1) du robinet qui reçoit le doigt de manœuvre (16) qui traverse par son extrémité le disque (4) formant le siège du robinet et qui pénètre dans un évidement (18) sur le côté d'étanchéité du disque (3) du robinet.

2. Robinet mélangeur à bras de levier selon la revendication 1, caractérisé en ce que le disque (3) du robinet s'appuie sur le côté de la chambre de mélange (12) qui est à l'opposé de la surface de raccordement (11) contre un couvercle (20) pour fermer une ouverture (21) du corps du robinet prévue pour la mise en place des disques de commande (3, 4) et des garnitures d'étanchéité statiques (7, 8).

3. Robinet mélangeur à bras de levier selon la revendication 1, caractérisé en ce que le corps (1) du robinet est muni, sur le côté où se trouve la surface de raccordement (11), d'une ouverture pour la mise en place des disques de commande (3, 4) et des garnitures d'étanchéité statiques (7, 8), et en ce que l'ouverture peut être fermée par un couvercle (23) comportant la monture (14) destinée au positionnement axial et fixe du doigt de manœuvre (16), la surface de raccordement (11) ainsi que les évidements destinés aux garnitures d'étanchéité statiques (7, 8).